Europäisches Patentamt

(19) European Patent Office

Office européen des brevets

(11) Publication number: **0 033 025**
**B1**

(12) **EUROPEAN PATENT SPECIFICATION**

(45) Date of publication of patent specification: **11.06.86**

(51) Int. Cl.⁴: **G 06 K 1/12**

(21) Application number: **80303811.6**

(22) Date of filing: **28.10.80**

(54) **Printing apparatus.**

(30) Priority: **16.11.79 US 95705**

(43) Date of publication of application:
**05.08.81 Bulletin 81/31**

(45) Publication of the grant of the patent:
**11.06.86 Bulletin 86/24**

(84) Designated Contracting States:
**DE FR GB**

(56) References cited:
**DE-A-2 728 699**
**FR-A-1 229 940**
**GB-A- 965 482**
**US-A-3 738 263**

(73) Proprietor: **NCR CANADA LTD - NCR CANADA LTEE**
**6865 Century Avenue**
**Mississauga Ontario, L5N 2E2 (CA)**

(72) Inventor: **Johannesson, Brian Jones**
**84 Blythwood Road**
**Waterloo Ontario N2L 4A2 (CA)**

(74) Representative: **Robinson, Robert George**
**International Patent Department NCR Limited**
**206 Marylebone Road**
**London NW1 6LY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Technical Field

This invention relates to an apparatus for printing bar code indicia on record media.

### Background Art

Bar codes have found increasing numbers of uses in recent years in connection with machine sensing of documents, containers, railway cars, etc. A bar code is relatively simple to sense, and enables the storage of a substantial amount of information in a relatively small area.

One use for bar coding which has been proposed, and which appears to have a number of important advantages, is in association with bank cheques to provide a cheque or document identification number (DIN) which can be imprinted upon a cheque or other document as it enters a financial institution for processing, and can be subsequently sensed from the cheque and used in document sorting and other processing.

Bar codes may be printed by mechanical impact-type printers, as well as ink jet printers. One type of mechanical bar code printer, employed in printing a colour bar code, consisting of bars of different colours in accordance with a predetermined code, is shown in United States Patent No. 3,738,263. The printer disclosed in this patent has a plurality of racks mounted parallel to one another and each having a print surface to effect printing of a bar on a particular print location of a record medium. The racks are slidably mounted for movement between first and second positions to align the print surfaces thereof with a first or second print station. A hammer at each print station is used to impact the record medium and a ribbon against the print surfaces located at the respective print station. The disadvantage of this apparatus lies in the complexity of its mechanical arrangement and in the complicated electrical circuitry required for the activation of selected racks for movement from one to the other of their positions.

An apparatus for producing index marks on a record member is disclosed in U.K. Patent No. 965 482. This apparatus includes a type member having two printing surfaces disposed at an angle to one another, said type member being pivotally mounted for movement between two positions such that either one or the other of the printing surfaces is brought into alignment with a printing area. In the disclosed embodiment, the type member carries different grain patterns on its two printing surfaces and is arranged to emboss selectively one or the other pattern on a strip of yieldable material. Since, in operation, each printing surface is arranged to be aligned with the whole printing area, such arrangement is suitable for use only in cases where the marks or patterns carried on the printing surfaces are different, and would be impractical where the printing surfaces carry identical marks or patterns.

### Disclosure of the Invention

It is an object of the present invention to overcome the above disadvantages by providing a printing apparatus which is simple in construction, easy to manufacture and is low in cost.

Thus, according to the invention, there is provided an apparatus for printing bar code indicia on a record medium moving in a path through said apparatus between a type member and a printing means movable relative to each other to effect printing on said record medium, wherein said type member is pivotally mounted for movement between two positions and has at its end facing said printing means two printing surfaces which are disposed at an angle to one another, such that each printing surface is arranged to be parallel to the path of movement of said record medium when said type member is in a respective one of the two positions, and at an angle to said path of movement when said type member is in the other of the two positions, characterized in that said printing means is a print hammer movable from a rest position to an activated position to impact said record medium against a printing surface of said type member to effect printing, in that the two printing surfaces carry identical bar patterns, and in that each printing surface, when parallel to the path of movement of said record medium, is arranged to be aligned with a different area of said print hammer.

### Brief Description of the Drawings

One embodiment of the invention will now be described, by way of example, with reference to the accompanying drawings, in which:—

Fig. 1 is a diagrammatic view illustrating one type of code which is suitable for imprinting on record media using the printing apparatus of the present invention.

Fig. 2 is a diagrammatic view showing the manner in which a type member and hammer of the printing apparatus of the present invention coact with record media to produce the desired printing.

Fig. 3 is a perspective view of the printing apparatus of the present invention.

### Best Mode of Carrying Out the Invention

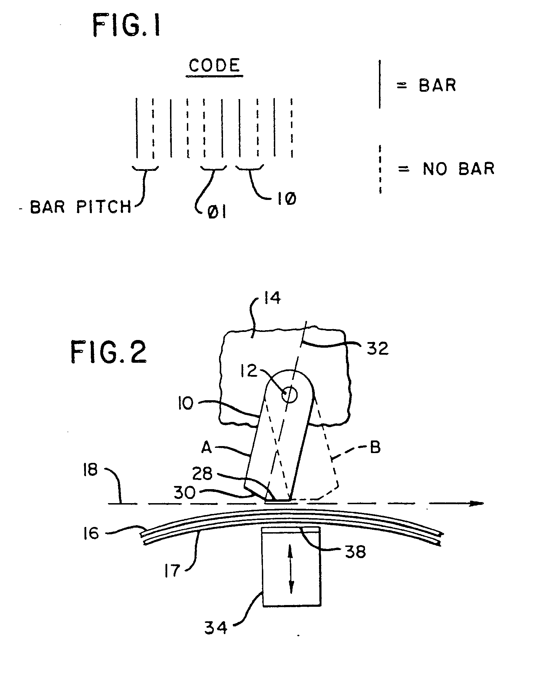

As shown in Fig. 1, a solid line represents the printing of a bar, or "1", while as dashed line represents no printing in that space, which may be considered to be a possible bar position, or "0". The "pitch" or width of a character or symbol in each instance includes two bar positions, only one of which is printed, so that the character or symbol will always be either "01" or "10". Thus, the exemplary word appearing in Fig. 1 is 10, 10, 01, 10, 10. This word can obviously be given a desired significance in accordance with the particular coding scheme selected.

The bar code may be printed on a document utilizing either a conventional ink, a magnetic ink, or some other type of ink which can be sensed using special equipment, such as a fluorescent ink. The use of magnetic ink, for example, has a number of advantages in association with documents such as bank cheques. There is no problem in distinguishing magnetic indicia from other information imprinted on the cheque in conventional ink. Also, a highly-developed technology for reading magnetically-encoded information from the cheques already exists, in the commonly-used MICR (magnetic ink character recognition) readers. The information which is thus sensed from the cheques can be decoded, using well-known magnetic tape, disc and drum decoding techniques.

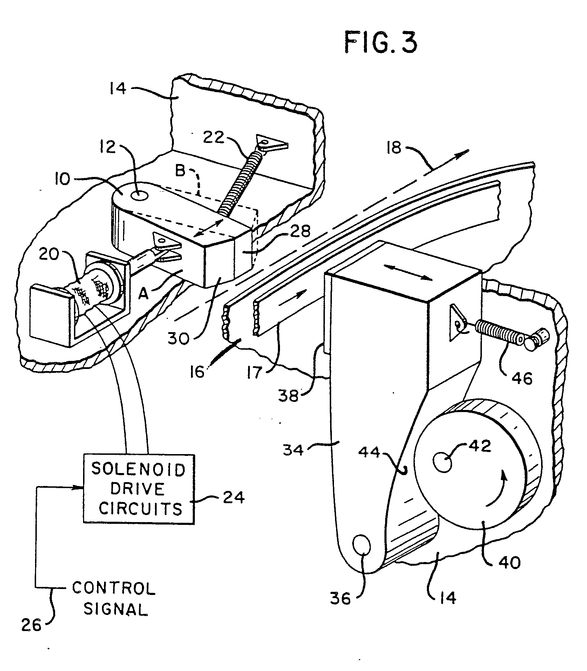

Referring now to Figs. 2 and 3, there is shown a type member 10 which is rockably mounted on a shaft 12 secured to a support member 14. The type member 10 is movable between a first position A shown in solid lines in Figs. 2 and 3, and a second position B shown in dashed lines in these Figures for printing on record media 16 moving in a path 18. The record media 16 may be of the carbon or carbonless transfer type, or if desired, a magnetic ink or other type of ribbon 17 may be employed. The type member 10 may be moved from one position to the other by any suitable means, such as a solenoid 20 which may also be mounted on the support member 14, coacting with a return spring 22, connected to said type member 10 and to the support member 14.

Energization of the solenoid may be controlled by a suitable controller 24, which in turn may be controlled by an input signal applied through an input circuit 26 from an appropriate device such as a data processing system or a buffer (not shown).

The type member 10 is provided at one end with two planar rectangular angled printing surfaces 28, 30, each having the configuration of the bar which is to be printed by the apparatus. As may best be seen in Fig. 2, the angle of the plane of each of the surfaces 28, 30, with respect to a plane 32 extending through the centre line of the shaft 12 and the longitudinal axis of the type member 10 is equal to the complement of the angle between the plane 32 and a plane through the centre line of the shaft 12 extending perpendicular to the path 18, when the type member 10 is located in position A or position B. It will be seen that when the type member 10 is in position A, surface 28 will be parallel and adjacent to the path 18, while surface 30 is angled away from said path. When the platen is in position B, surface 30 will be parallel and adjacent to the path 18, while surface 28 is angled away from said path.

Positioned on the other side of the path 18 and the record media 16 from the type member 10 is a hammer 34 pivotally mounted at 36 on the support member 14 and having a face 38 capable of coacting with one or the other of the printing surfaces 28, 30 for printing on the record media 16. A cam 40 rotatably mounted at 42 on the support member 14 cooperates with a cam following surface 44 on the hammer 34 to cause said hammer to move in regularly excursioned movement to provide a printing stroke during each rotation of the cam 40 which is driven at constant speed by a suitable power source (not shown). A return spring 46 maintains the follower surface 44 in engagement with the periphery of the cam 40 and effects the return of the hammer 34 to its extreme non-printing position after each printing stroke. If desired, some suitable hammer actuating means other than a cam and follower arrangement could be employed.

Referring particularly to Fig. 2, it will be seen that when the type member 10 is in position A, the printing surface 28 is parallel and adjacent to the path 18 of record media movement, so that when the hammer 34 is moved in a printing stroke by the cam 40, the ribbon 17 and record media 16 are engaged between the surface 28 and the hammer face 38 to cause a bar symbol to be printed at the left side, as viewed in Fig. 2, of the space on the record media 16 defined by the face 38 of the hammer 34.

On the other hand, when the type member 10 is moved to position B, the face 30 is placed in parallel, adjacent relationship to the record media 16 in the path 18. In this case, a printing stroke by the hammer 34 causes a bar symbol to be printed at the right side, as viewed in Fig. 2, of the space on the record media 16 defined by the face 38 of the hammer 34.

Since a blank, or no printing, in a possible bar position on the record media has been defined in the code as "0", and since the printing of a bar in a possible bar position has been defined in the code as "1", it will be seen that, looking down on the record media 16 as viewed in Fig. 2, a printing stroke with the type member 10 in position A provides a "10", while a printing stroke with the member in position B provides a "01" symbol.

## Claims

1. Apparatus for printing bar code indicia on a record medium (16) moving in a path (18) through said apparatus between a type member (10) and a printing means (34) movable relative to each other to effect printing on said record medium (16), wherein said type member (10) is pivotally mounted for movement between two positions (A and B) and has at its end facing said printing means (34) two printing surfaces (28, 30) which are disposed at an angle to one another, such that each printing surface is arranged to be parallel to the path of movement (18) of said record medium (16) when said type member (10) is in a respective one of the two positions (A, B), and at an angle to said path of movement (18) when said type member (10) is in the other of the two positions (A, B), characterized in that said printing means (34) is a print hammer movable from a rest position to an activated position to impact said record medium (16) against a printing surface (28, 30) of said type member (10) to effect printing, in that the two printing surfaces (28, 30) carry identical bar patterns, and in that each printing surface (28, 30), when parallel to the path of movement (18) of said record medium, is arranged to be aligned with a different area of said print hammer (14).

2. Apparatus according to claim 1, characterized in that said identical bar patterns on each of said printing surfaces (28, 30) include only one bar positioned thereon, whereby the code symbol printed on said record medium (16) is "01" when said type member (10) is in said first position (A) and "10" when it is in said second position (B), wherein no mark represents "0" and a printed bar represents "1".

3. Apparatus according to claim 1, characterized in that said print hammer (34) is driven by cam means (40) rotated at a constant speed.

4. Apparatus according to claim 3, characterized in that said cam means (40) cooperates with a cam following surface (44) on said print hammer (34) causing said print hammer (34) to move regularly so as to provide a printing stroke during each rotation of said cam means (40).

**Patentansprüche**

1. Einrichtung zum Drucken von Strichcodemarkierungen auf einen Aufzeichnungsträger (16), der sich durch die Einrichtung auf einem Weg (18) zwischen einem Typenglied (10) und einem Druckmittel (34) hindurchbewegt die relativ zueinander bewegbar sind um das Drucken auf den Aufzeichnungsträger (16) zu bewirken, wobei das Typenglied (10) zwischen zwei Stellungen (A und B) bewegbar ist, und das eine Ende des Typengliedes (12), das dem Druckmittel (34) gegenübersteht, zwei Druckflächen (28, 30) besitzt, die in einem Winkel zueinander angeordnet sind, so daß jede Druckfläche derart angeordnet ist, daß sie parallel zum Bewegungsweg (18) des Aufzeichnungsträgers (16) ist, wenn sich das Typenglied (10) in einer entsprechenden der beiden Stellungen (A, B) befindet, und in einem Winkel zu dem Bewegungsweg (18), wenn das Typenglied (10) sich in der anderen der beiden Positionen (A, B) befindet, dadurch gekennzeichnet, daß das Druckmittel (34) ein Druckhammer ist, der aus einer Ruhestellung in eine betätigte Stellung bewegbar ist, um den Aufzeichnungsträger (16) gegen die Druckfläche des Typengliedes (10) zu schlagen, wodurch ein Druck auf den Aufzeichnungsträger (16) bewirkt wird, daß die zwei Druckflächen (28, 30) identische Strichmarkierungen aufweisen, und daß jede Druckfläche (28, 30) wenn sie parallel zum Bewegungsweg (18) des Aufzeichnungsträgers (16) ist, einem verschiedenen Oberflächenteil des Druckhammers (14) gegenübersteht.

2. Einrichtung nach Anspruch 1, dadurch gekennzeichnet, daß identische Strichmarkierungen auf jeder der Druckflächen (28, 30) nur einen Strich aufweisen, der darauf derart angeordnet ist, daß das Codesymbol, das auf dem Aufzeichnungsträger (16) gedruckt wird, "01" ist, wenn sich das Typenglied (10) in der ersten Stellung (A) befindet und "10", wenn es sich in der zweiten Stellung (B) befindet, wobei keine Markierung "0" und ein gedruckter Strich eine "1" darstellt.

3. Einrichtung nach Anspruch 1, dadurch gekennzeichnet, daß der Druckhammer (34) durch Nockenmittel (40) angetrieben wird, die mit konstanter Geschwindigkeit rotieren.

4. Einrichtung nach Anspruch 3, dadurch gekennzeichnet, daß die Nockenmittel (40) mit einer Nockenführungsfläche (44) an dem Druckhammer (34) zusammenwirken, wodurch der Druckhammer (34) regelmäßig bewegt wird, so daß während jeder Umdrehung der Nockenmittel (40) ein Druckanschlag erfolgt.

**Revendications**

1. Appareil pour imprimer des codes à bâtonnets sur un milieu (16) d'enregistrement se déplaçant sur un trajet (18) à travers ledit appareil entre un élément (10) à caractère et un moyen (34) d'impression qui sont mobiles l'un par rapport à l'autre pour imprimer sur le milieu (16), dans lequel ledit élément (10) à caractère est mobile entre deux positions (A et B), et une première extrémité dudit élément (10) à caractère qui fait face audit moyen (34) d'impression présente deux surfaces (28, 30) d'impression formant un certain agle entre elles, chaque surface d'impression étant disposée afin d'être parallèle au trajet du mouvement (18) dudit milieu (16) d'enregistrement lorsque ledit élément (10) à caractére est dans l'une, respective, des deux positions (A, B), et sous un angle avec ledit trajet de mouvement (18) lorsque ledit élément (10) à caractère est dans l'autre des deux positions (A, B), caractérisé en ce que ledit moyen (34) d'impression est un marteau (34) d'impression qui est mobile d'une position de repos à une position d'actionnement pour frapper ledit milieu (16) d'enregistrement contre une surface d'impression dudit élément (10) à caractère, afin d'effectuer une impression sur ledit milieu (16) d'enregistrement, en ce que les deux surfaces (28, 30) d'impression portent une configuration de bâtonnet identique, et en ce que chaque surface (28, 30) d'impression lorsqu'il est parallèle au trajet de mouvement (18) dudit milieu (16), fait face à une position différente de la surface du marteau (14) d'impression.

2. Appareil selon la revendication 1, caractérisé en ce que ladite configuration de bâtonnet identique de chacune desdites surfaces (28, 30) d'impression comprend seulement un bâtonnet disposé sur elle afin que le symbole de code imprimé sur ledit milileu (16) d'enregistrement soit "01" lorsque ledit élément (10) à caractère est dans ladite première position (A) et "10" lorsqu'il est dans ladite seconde position (B), l'absence de marque représentant "0" et une barre imprimée représentant "1".

3. Appareil selon la revendication 1, caractérisé en ce que ledit marteau (34) d'impression est entraîné par un moyen (40) à came mis en rotation à une vitesse constante.

4. Appareil selon la revendication 3, caractérisé en ce que ledit moyen (40) à came coopère avec une surface (44) suiveuse de came située sur ledit marteau (34) d'impression, ce qui a pour effet que ledit marteau (34) d'impression se déplace régulièrement pour exécuter une course d'impression lors de chaque rotation dudit moyen (40) à came.

# FIG.1

CODE

| = BAR

⁝ = NO BAR

- BAR PITCH
01
10

# FIG.2

14
32
12
10
A
B
18
28
30
16
17
38
34

# FIG. 3

SOLENOID
DRIVE
CIRCUITS — 24

CONTROL
SIGNAL